# EUROPEAN PATENT SPECIFICATION

(11) **EP 1 496 585 B1**
(45) Date of publication and mention of the grant of the patent: **20.05.2015**
(21) Application number: 02722697.6
(22) Date of filing: 12.04.2002
(51) Int. Cl.: H02B 13/01

(54) **METAL CLOSED TYPE DISTRIBUTOR**
VERTEILER DES METALL-GESCHLOSSEN-TYPS
ARMOIRE DE DISTRIBUTION METALLIQUE FERMEE

(43) Date of publication of application: 12.01.2005
(73) Proprietor: MITSUBISHI DENKI KABUSHIKI KAISHA, Chiyoda-ku Tokyo 100-8310 (JP)
(72) Inventor: OKAZAWA, Hiroshi, c/o Mitsubishi Denki K. K., Tokyo 100-8310 (JP); SATOU, Toshifumi, c/o Mitsubishi Denki K. K., Tokyo 100-8310 (JP); UENUSHI, Masashi, c/o Mitsubishi Denki K. K., Tokyo 100-8310 (JP); SANO, Kouji, c/o Mitsubishi Denki Kabushiki Kaisha, Tokyo 100-8310 (JP)
(74) Representative: Hoffmann Eitle
(86) International application number: PCT/JP2002/003690
(87) International publication number: WO 2003/088441

(56) References cited:
- EP-A2- 0 570 688
- DE-B- 1 161 624
- FR-A- 1 406 780
- GB-A- 753 375
- JP-A- 3 082 309
- JP-A- 9 200 916
- JP-A- 10 210 615
- JP-A- 10 336 807
- JP-U- 2 072 604
- JP-U- 53 055 732

## Description

### TECHNICAL FIELD

This invention relates to a metal-enclosure type distribution panel for use in a power distribution substation.

### BACKGROUND ART

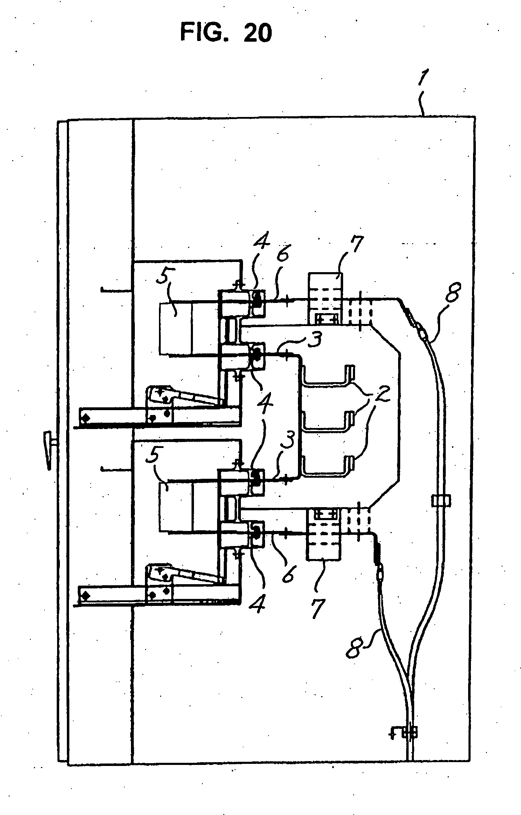

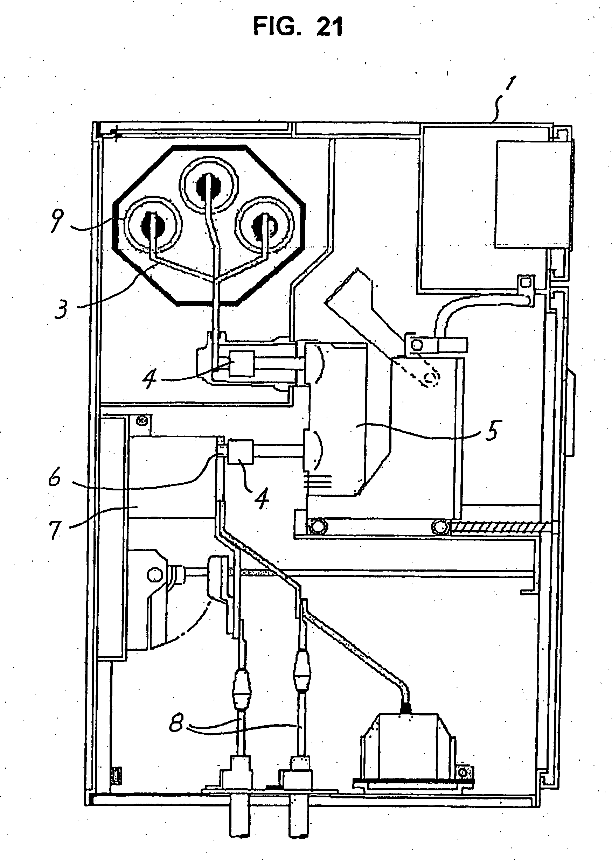

Figs. 20 and 21 schematically illustrate a closure-type distribution panel heretofor has been used in a power distribution substation, Fig. 20 showing an example of an air-insulated panel and Fig. 21 showing an example of a gas-insulated panel.

In the air-insulated panel illustrated in Fig. 20, bus conductors 2 are introduced into a distribution panel housing 1, and the bus conductor 2 are connected to vacuum valves 5 or vacuum interrupters by means of connecting conductors 3 and disconnector portions 4, and then the vacuum valves 5 are connected to external cables 8 by means of load side connecting conductors 6 and current transformers 7. In the gas-insulated closure-type distribution panel shown in Fig. 21, the gas-insulated bus conductors 9 are introduced into a distribution panel housing 1, and the bus conductors 9 are connected to vacuum valves 5 or vacuum interrupters by means of connecting conductors 3 and disconnector portions 4 on the power source side, and then the vacuum valves 5 are connected to external cables 7 by means of load side disconnector portions 4 on the load side, the connecting conductors 5 and current transformers 6.

In the vacuum valve used in the closure-type distribution panel having the above-described structure, as well known, the movable side conductors 6 for supporting the movable electrodes extend outwardly of and through an axial end walls of the vacuum vessels 2, and the movable side conductors have connected thereto flexible connecting conductors at the outside of the vacuum vessels to define shunt portions that are high voltage live portions. Since these high voltage live portions are also movable portions, they have been disposed in a bare state in air within the distribution panel. Therefore, in order to ensure that small animals or the like do not touch the high voltage live portion and bring any malfunctioning in the circuit, it has been necessary to use a mold frame made of an electrically insulating material. Also, when an insulating gas is to be used in the closure type distribution panel, a insulating gas sealing vessel must have been used.

Also, other insulating mold frames at suitable positions and the insulating gas and gas tight vessels have been necessary for providing appropriate electrical insulation between the phases and poles as well as the insulation relative to the ground.

Thus, in the distribution panel in which a conventional vacuum valve is used, a high voltage live portion is provided between the vacuum valve and the operating insulating rod in the bare and exposed state, a mold frame and a hermetic vessel must have been used, so that parts must be fixed or welded during the assembly, making the realization of a small-sized distribution board difficult.

EP 0 570 688 A2 discloses a switchgear comprising a plurality of device chambers, accommodating main circuit devices disposed adjacently to each other and connection cables housed outside the device chambers.

GB 753 375 discloses a metal-clad electric high voltage switchgear.

FR 1 406 780 describes a fully-insulated high voltage switchgear in which all parts conducting high voltage electricity are encased by a layer made of insulating material.

DE 1 161 624 relates to a switchgear for medium voltages wherein those parts containing a voltage and the electrical devices have been accommodated in insulating chambers which form building blocks.

### DISCLOSURE OF INVENTION

Accordingly, one object of the present invention is to provide a metal enclosed distribution panel that is compact and can be easily arranged according to demands.
(1) With the above objects in view, the metal-enclosure type distribution panel comprises a housing, an interrupting unit for current interruption supported within said housing and unitized by a mold resin insulator, a grounding unit supported within said housing and unitized by a mold resin insulator and electrically and mechanically connected to said interrupting unit; a bus unit connected to said interrupting unit for connecting said interrupting unit to said bus, and a cable connecting portion unit connected to said grounding unit for connecting said grounding unit to a cable interrupting unit and said grounding unit including respective terminals capable of engaging with each other to electrically and mechanically connect said grounding unit and said interrupting unit, the cable connecting portion unit being connected to said grounding unit. Therefore, various kinds of units can be easily selectively combined, so that a compact metal enclosed distribution panel can be obtained.
(2) The interrupting unit and said grounding unit each may comprise a mold resin insulator including a partial concave portion or a convex portion, a stationary electrode and a movable electrode disposed within a vacuum vessel embedded within said mold resin insulator, a stationary side terminal conductor having one end connected to said stationary electrode and the other end defining a stationary side terminal together with said partial concave portion or said convex portion of said mold resin insulator, a movable side conductor having one end connected to said movable electrode to define a shunt portion and the other end defining a movable side terminal together with said partial concave portion or said convex portion of said mold resin insulator, an insulating rod having an end connected within said vacuum vessel to said movable electrode and the other end cable being connected to a switching operating device, and a switching operating device connected to said insulating rod and having substantially the same projection as a projection shape in the direction of axis of said vacuum valve, said stationary side terminal or said movable side terminal or said movable side terminal of said grounding unit and said stationary side terminal or said movable side terminal of said interrupting unit are fit-engaged to each other. Therefore, the shut portion which is a high voltage live portion is embedded within the mold resin insulator, so that small animals or the like do not touch the high voltage live portion and bring no malfunctioning in the circuit, and there is no need to use an insulating gas in the closure type distribution panel, and also no separate insulator for establishing electric insulations between the phases and the poles as well as the insulation to the ground.
(3) The interrupting unit, said disconnecting unit and/or said grounding unit may be provided with three resin molded vacuum valves arranged side by side in parallel and connected to resin molded switching operating device, and wherein said switching operating device has a substantially rectangular parallelopipe configuration exhibiting a projected shape in the direction of an axis of said vacuum valve substantially the same as an outer contour of said three vacuum valves, so that each unit is interchangeable.
(4) The metal enclosed distribution panel may further comprise a disconnector unit unitized into a substantially rectangular parallelopipe by a mold resin insulator and electrically and mechanically connected to said grounding unit for opening an electric current path, so that the disconnecting unit can be made compact and the metal enclosed distribution panel can be provided with a disconnecting function.
(5) The metal enclosed distribution panel may further comprise a second grounding unit unitized into a substantially rectangular parallelopipe by a mold resin insulator and electrically and mechanically connected to said interrupting unit, so that the grounding unit can be made compact and the metal enclosed distribution panel can be provided with a grounding function.
(6) The metal enclosed distribution panel may further comprise a second disconnector unit unitized into a substantially rectangular parallelopipe by a mold resin insulator and electrically and mechanically connected to said grounding unit for opening an electric current path, and a third grounding unit supported within said housing, unitized into a substantially rectangular parallelopipe by a mold resin insulator and electrically and mechanically connected to said second disconnector unit, so that the disconnecting function and the grounding function can be strengthened.
(7) The disconnector unit connected to said bus unit may include a shunt terminal, and further comprise a shunt unit supported within said housing and connected to said shunt terminal of said disconnector unit, and a second bus unit connected to said shunt unit for connecting said interrupting unit to said bus, so that the dual bus conductor system can be applied.
(8) The bus unit may be the one in which the bus conductors for three phases are molded in three-phase-in-one by the mold resin insulator and in which one portion of said bus conductor is exposed so as to be electrically and mechanically connectable to the terminal of said disconnector unit, so that each unit can be made compact and provided with an interchangeability and the number of parts can be decreased.
(9) The cable connection unit may be the one in which the connecting conductors for three phases are molded in three-phase-in-one by the mold resin insulator and in which one end is connectable to said grounding unit and the other end is electrically and mechanically connectable to said cable connecting portion, so that each unit can be made compact and provided with an interchangeability and the number of parts can be decreased.

### BRIEF DESCRIPTION OF THE DRAWINGS

Fig. 1 is a perspective view illustrating the metal enclosed distribution board according to one embodiment of the present invention in which the grounding unit, the interrupting unit, the second grounding unit, the second interrupting unit and the third grounding unit are installed one above the other between the bus unit and the cable connecting unit.
Fig. 2 is a partially cut away perspective view of the metal enclosed distribution panel shown in Fig. 1.
Fig. 3 is a perspective view illustrating the bus unit in which the buses are three-phase-in-one molded for use in the metal enclosed distribution panel shown in Figs. 1 and 2.
Fig. 4 is a partially cut away perspective view of the bus unit shown in Fig. 3.
Fig. 5 is a perspective view illustrating the disconnecting unit in which the vacuum valve for disconnection is molded in three-phase-in-one and combined with the switching operating device for use in the metal enclosed distribution panel shown in Figs. 1 and 2.
Fig. 6 is a cut away perspective view of the disconnecting unit shown in Fig. 5.
Fig. 7 is a perspective view illustrating the grounding unit in which the vacuum valve for grounding is molded in three-phase-in-one and combined with the switching operating device for use in the metal enclosed distribution panel shown in Figs. 1 and 2.
Fig. 8 is a cut away perspective view of the disconnecting unit shown in Fig. 7.
Fig. 9 is a perspective view illustrating the interrupting unit in which the vacuum valve for interrupting is molded in three-phase-in-one and combined with the switching operating device for use in the metal enclosed distribution panel shown in Figs. 1 and 2.
Fig. 10 is a cut away perspective view of the interrupting unit shown in Fig. 9.
Fig. 11 is a perspective view illustrating the cable connecting unit in which the connecting conductor is molded in three-phase-in-one for use in the metal enclosed distribution panel shown in Figs. 1 and 2.
Fig. 12 is a cut away perspective view of the disconnecting unit shown in Fig. 10.
Fig. 13 is a partially cut away perspective view illustrating the metal enclosed distribution panel of another embodiment of the present invention in which the grounding unit, the interrupting unit and the second grounding unit are placed one above the other in the named order between the bus unit and the cable connecting unit.
Fig. 14 is a cut away perspective view of the metal enclosed distribution panel shown in Fig. 13.
Fig. 15 is a perspective view illustrating the metal enclosed distribution panel not falling under the present invention in which the disconnecting unit, the grounding unit and the interrupting unit are placed one above the other in the named order between the bus unit and the cable connecting unit.
Fig. 16 is a cut away perspective view of the metal enclosed distribution panel shown in Fig. 15.
Fig. 17 is a perspective view illustrating the metal enclosed distribution panel of an embodiment of the present invention in which the interrupting unit and the grounding unit are placed one above the other in the named order between the bus unit and the cable connecting unit.
Fig. 18 is a cut away perspective view of the metal enclosed distribution panel shown in Fig. 17.
Fig. 19 is a perspective view illustrating the metal enclosed distribution panel of another embodiment of the present invention in which the shunt unit is used in a metal enclosed distribution panel similar to that shown in Fig. 1 to constitute the double bus bar system.
Fig. 20 is a schematic view illustrating the conventional air-insulated metal enclosed distribution panel.
Fig. 21 is a schematic view illustrating the conventional gas-insulated metal enclosed distribution panel.

### BEST MODE FOR CARRYING OUT THE INVENTION

### Embodiment 1

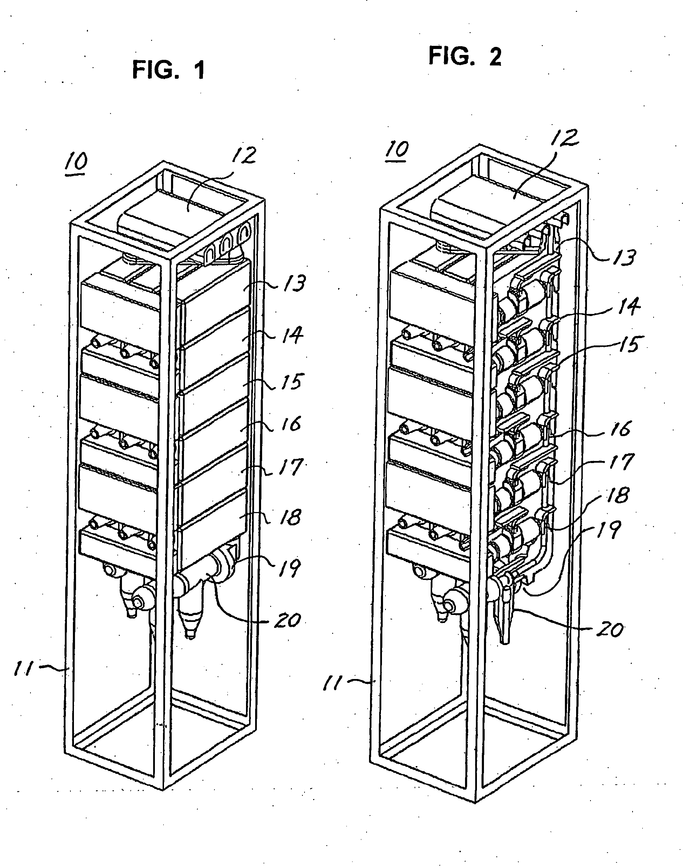

Figs. 1 and 2 illustrate a metal enclosed distribution panel 10 according to one embodiment of the present invention. The metal enclosed distribution panel 10 comprises a metal-enclosure type housing 11 (only a frame is illustrated in the figure) and a bus unit 12 disposed in the housing 11 for the introduction thereinto. Disposed below the bus unit 12 in the named order from the above in a stacked manner supported by the housing 11 are a disconnecting unit 13, a grounding unit 14 connected to the disconnecting unit 13, an interrupting unit 15 connected to the grounding unit 14, a second grounding unit 16 connected to the interrupting unit 15, a second disconnecting unit 17 connected to the second grounding unit 16, and a third grounding unit 18 connected to the second disconnecting unit 17. A cable connecting unit 19 is connected and disposed below the third grounding unit 18 so that a cable (not shown) for connection to a load may be connected by means of a cable connecting portion 20 including a current transformer.

These units or the bus unit 12, the disconnector units 13 and 17, the grounding units 14, 16 and 18, the interrupting unit 15 and the cable connecting unit 19 include a projected or receded terminal which engages each other to electrically and mechanically connect between the respective units as will be described in detail later. Also, the disconnecting units 13 and 17, the grounding units 14, 16 and 18 as well as the interrupting unit 15 have three resin molded vacuum valves arranged in side-by-side in parallel and connected to the resin molded switching operating device and configured to be a compact rectangular parallelopipe configuration as a whole so that when these units are installed in a stack as illustrated the entire structure as a whole may be compact.

While the mold resin insulator of each of the vacuum valves are illustrated as being substantially rectangular parallelopipe configuration, it is to be noted that, while this configuration is convenient for arranging each of the overall unit into a substantially rectangular parallelopipe configuration, the mold resin insulator may have any suitable configuration other than a rectangular parallelopiped configuration, such as columns of various cross section. Some of preferred examples include a configuration that can be referred to as the nissen-hut type in which a half cylinder member is placed on a rectangular parallelopipe member, the scutum-like shape in which a half cylinder is attached to top and bottom of the rectangular parallelopipe member, a cylinder having a circular cross section. The switching operating device has an outer shape of a substantially rectangular prallelopipe configuration exhibiting a projection similar to an outer contour drawn by three vacuum valves in the direction of axis of the vacuum valve not only when the mold resin insulator of the vacuum valve is substantially rectangular parallelopipe, but also when it is of another column-like shape, so that the respective unit as a whole in which the vacuum valves and the switching operating device are combined may have a substantially rectangular parallelopipe configuration.

### Bus Unit 12

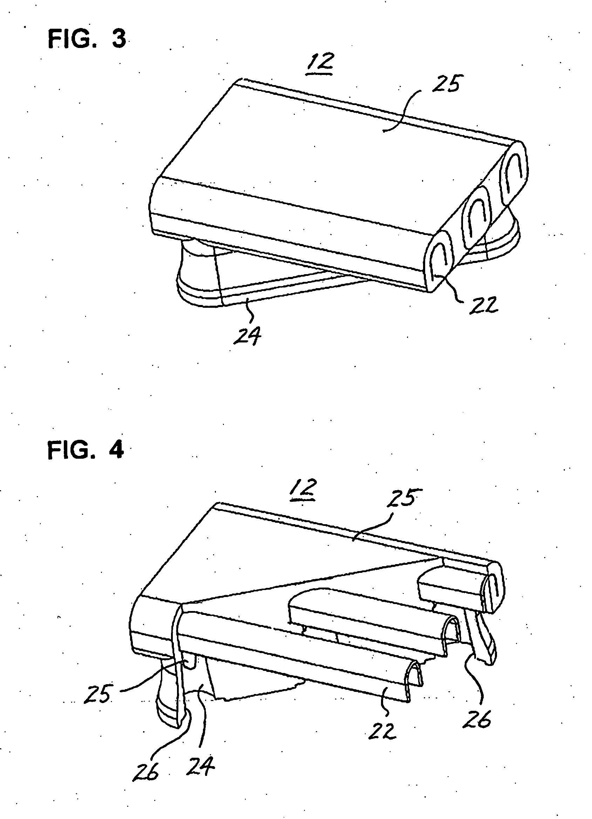

Figs. 3 and 4 illustrate the details of the bus unit 12. The bus unit 12 comprises a bus conductors 22 arranged in parallel to each other for connection to the unillustrated source side bus conductors for three phases, connection terminal conductors 23 perpendicularly and downwardly extending as viewed in the figure from each bus conductor 22, and a mold resin insulator 25 molding the bus conductors 22 and the connecting terminal conductors 23 into a three-phase-in-one to define terminals 24. The terminals 24 are defined by the connecting terminal conductors 23 exposed through the concave portions 26 formed in the mold resin insulator 25. Also, since the terminals 24 are disposed on different longitudinal positions along the three bus conductors 22 parallel to each other, the line passing through the centers of the connecting terminal conductors 23 of the terminals 24 is angled relative to the longitudinal direction of the bus conductors 22. This is for the purpose of establishing connections to the terminals of the disconnecting unit 13 having the vacuum valves arranged at substantially right angles relative to the bus conductors 22 as illustrated in Figs. 1 and 2. Thus, the bus unit 12 is the one in which the bus conductors 22 are molded within the mold resin insulator 25, and one portion of the bus conductors 22 is exposed from the concave portions 26 of the mold resin insulator 25 by means of the connecting terminal conductors 23 so that the electrical and mechanical connection to the disconnecting unit 13 may be established.

### Disconnecting Unit 13

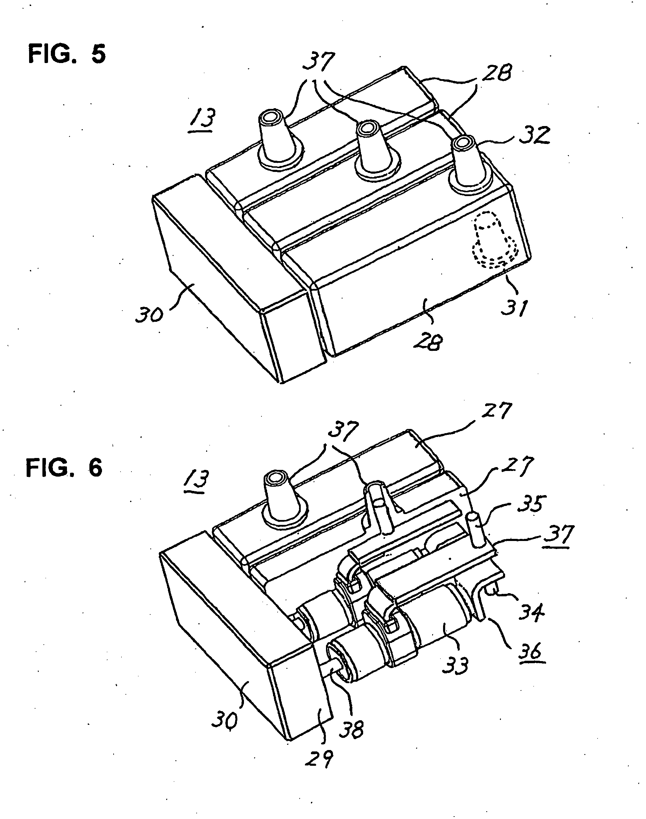

Figs. 5 and 6 illustrated the details of the disconnecting unit 13. The disconnecting unit 13 is molded by the mold resin insulator 27 and comprises three vacuum valves 28 arranged side-by-side in parallel and exhibiting disconnecting capability and a switching operating device 30 connected to the vacuum valves 28 and molded by the mold resin insulator 27. The outer shape of the switching operating device 30 is a substantially rectangular parallelopipe configuration having a projected shape very similar to the rectangular outer contour drawn by three vacuum valves 28. The combined vacuum valves 28 and the switching operating device 30 are combined to define a compact rectangular parallelopipe configuration as a whole.

The mold resin insulator 27 of the vacuum valves 28 includes a partial concave portion 31 similar to the concave portion 26 of the terminal 24 of the bus unit 12 shown in Fig. 4 and a convex portion 32 complementary in shape with the concave portions 26 and 31, and terminals 36 and 37 are constituted by conductors 34 and 35 that extend from the electrode (not shown) within a vacuum vessel 33 to be exposed within the concave portion 31 or the convex portion 32. The opening and closing operation of the electrode is achieved by an insulating rod 38 connected to a switching operating device 30. The terminals 36 are disposed at one end of the three vacuum valves 28 and arranged along one of the sides of the disconnecting unit 13 which has a generally rectangular parallelopipe configuration. The terminals 37 are disposed at the positions shifted in the longitudinal direction per the positins of the vacuum valves 28 progress so as to diagonally traverse the top surface of the disconnecting unit 13, so that they can be inserted and fitted into the concave portions 26 of the terminals 24 of the bus unit 12 shown in Figs. 3 and 4.

The disconnecting unit 17 shown in Figs. 1 and 2 has the same structure as that of the first disconnecting unit 13.

### Grounding Unit 14

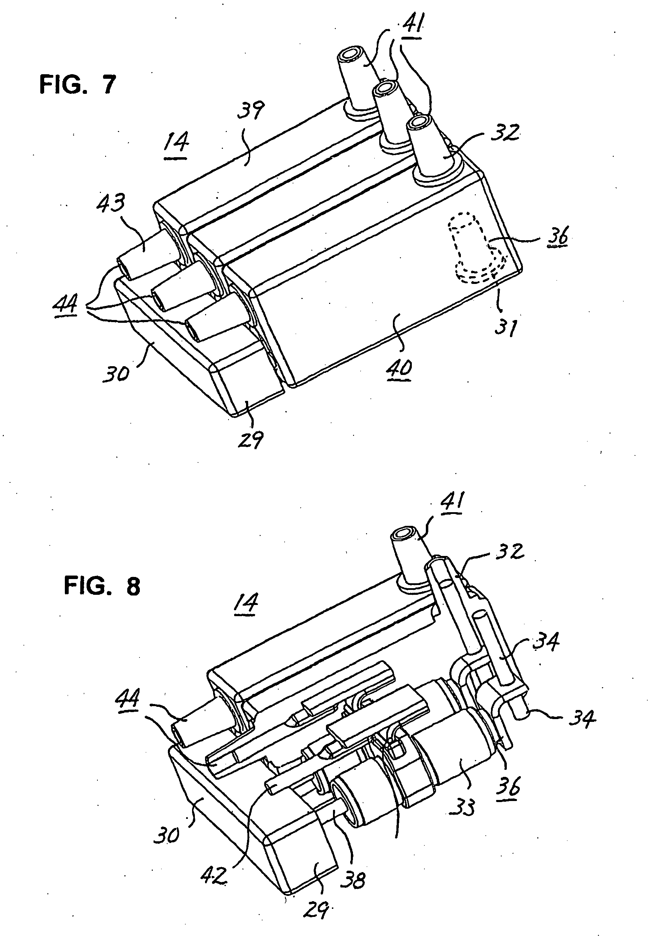

Figs. 7 and 8 illustrate the details of the grounding unit 14. The grounding unit 14 comprises three vacuum valves 40 which are grounding switches molded within a mold resin insulator 39 and arranged side-by-side in parallel and the switching operating device 30 molded in the mold resin insulator 29. The outer shape of the switching operating device 30 is a substantially rectangular prallelopipe configuration having a projection similar to the outer contour generally drawn by three vacuum valves 40 although its height is smaller. The combined vacuum valves 40 and the switching operating device 30 are combined into a compact, substantially rectangular parallelopipe configuration.

The mold resin insulator 39 of the vacuum valve 40 comprises partial concave portions 31 similar to the concave portions 26 of the terminals 36 of the disconnecting unit 13 shown in Figs. 5 and 6 and convex portions 32 complementary in shape with the concave portions 31, and the terminals 36 and 41 are constituted by the conductors extending from the electrodes (not shown) in the vacuum vessels 33 to be exposed within the concave portions 31 or the convex portions 32 of the mold resin insulator 39. The opening and closing operation of the electrodes is performed by the insulating rods 38 connected to the switching operating device 30. The terminals 36 and 41 are disposed at one end of three vacuum valves 40 and arranged along one of the sides of the generally rectangular parallelopipe grounding unit 14. A grounding conductor 41 extends from the movable electrode within the vacuum vessel 33 to further extend in parallel to the insulating rode 38 in the opposite direction to the terminals 36 and 41. In this position, the grounding conductor 42 is surrounded by the convex portion43 of the truncated conical mold resin insulator 39 similar to the convex portion 32 of the terminal 41.

The grounding unit 16 and the third grounding unit 18 shown in Figs. 1 and 2 have similar structure as that of the first grounding unit 14.

### Interrupting Unit 15

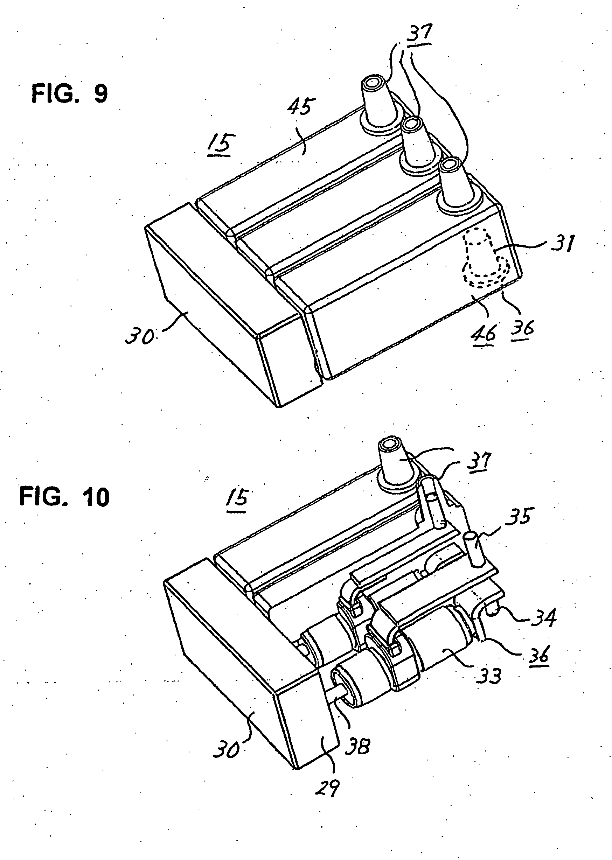

Figs. 9 and 10 illustrated the details of the interrupting unit 15. The interrupting unit 15 is the one in which the three vacuum valves 46 are molded with the mold resin insulator 45 and has the current interrupting capability, and the terminals 37 are arranged along one of the sides of the generally rectangular parallelopipe so that they may be inserted and fitted into the terminals of other unit. In other respects the general structure of the interrupting unit 15 is substantially the same as the structure of the disconnecting unit 13, enabling a generally compact rectangular parallelopipe configuration.

### Cable Connecting Unit 19

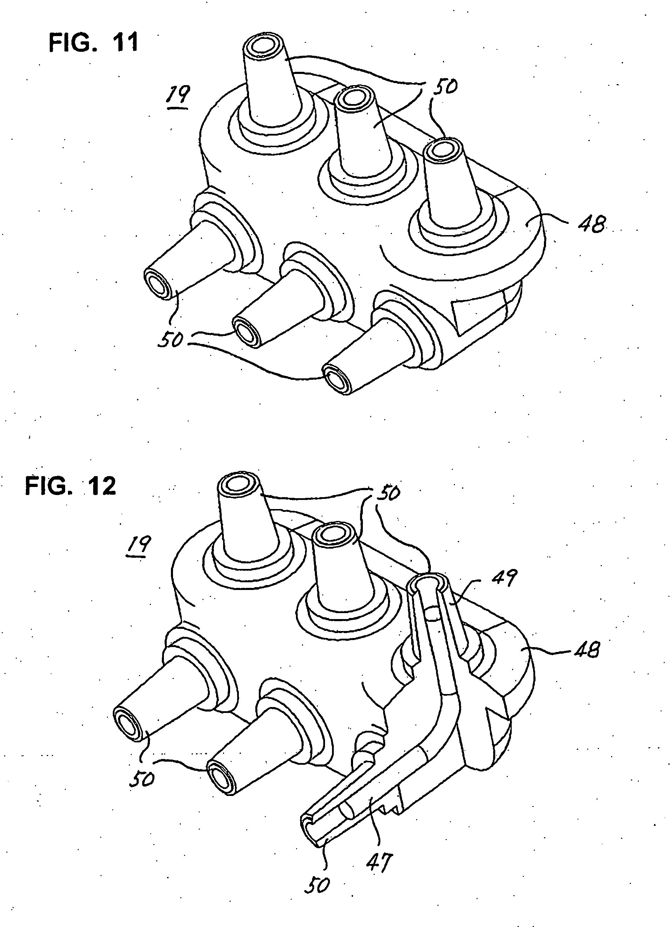

Figs. 11 and 12 illustrate the details of the cable connecting unit 19. The cable connecting unit 19 is the one in which connecting contact conductors 47 for three phases each bent into an "L" shape are arranged side-by-side in parallel and three-phase-in-one molded with a block-shaped mold resin insulator 48. Both ends of the connecting contact conductors 47 project from the block-shaped mold resin insulator 48 and surrounded by the truncated conical convex portion 49 of the mold resin insulator 48, the connecting contact conductor 47 and the convex portion 49 in combination constitute a connecting terminal 50. In Figs. 1 and 2, one end of the connecting terminal 50 has connected thereto the terminal grounding unit 15 and the other end thereof is arranged so as to be electrically and mechanically connected to the cable connecting portion 21 including the current transformer 20.

Thus, the vacuum valves used in the metal enclosed distribution panel of the present invention has the shut portion of the terminals which are high voltage live portions embedded within the mold resin insulator, so that the live portions are not left exposed even when it is the air-insulated distribution panel. Therefore, the mold frame made of an electrically insulating material for maintaining the insulations between the phases, relative to the ground and between the poles is not necessary and no hermetic vessel for the insulating gas is required. Also, small animals or the like do not touch the high voltage live portion and bring no malfunctioning in the circuit. Therefore, during the assembly of the metal enclosed distribution panel, the parts do not have to be fixed or welded during the assembly, posing no difficulty in the realization of a small-sized distribution board.

### Embodiment 2

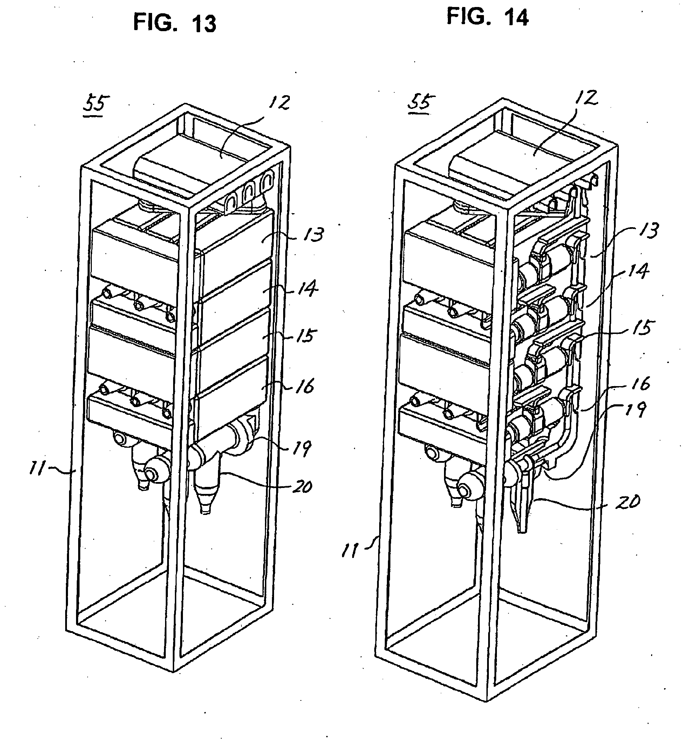

A metal enclosed distribution panel 55 shown in Figs. 13 and 14 has an overall structure similar to that of the metal enclosed distribution panel 10 shown in Figs. 1 and 2, but they are different in that the second grounding unit 16 is directly connected to the cable connecting unit 19 in the metal enclosed distribution panel 55 whereas the second disconnecting unit 17 and the third grounding unit 18 are disposed between the second grounding unit 16 and the cable connecting unit 19 in the metal enclosed distribution panel 10 shown in Figs. 1 and 2. In other respects, the structure is the same.

### Example not falling under the present invention

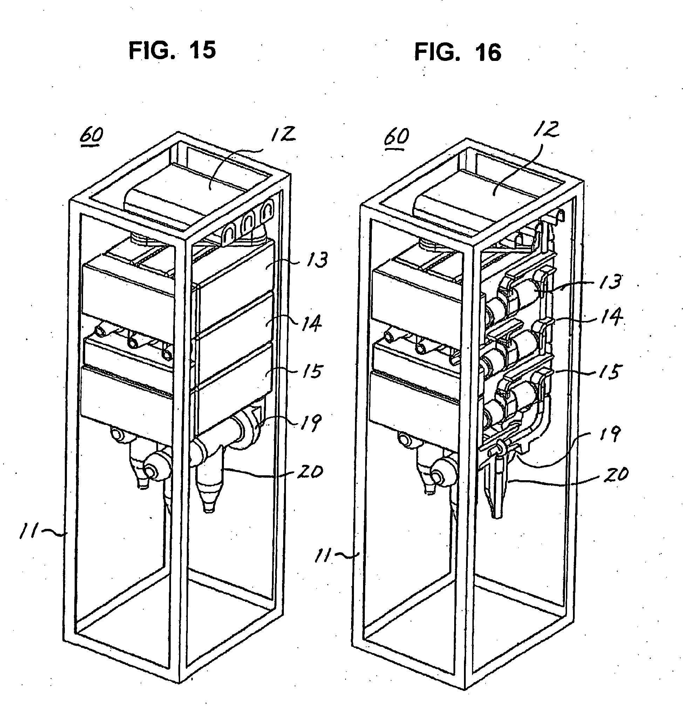

A metal enclosed distribution panel 60 shown in Figs. 15 and 16 has an overall structure similar to that of the metal enclosed distribution panel 55 shown in Figs. 13 and 14, but they are different in that the interrupting unit 15 is directly connected to the cable connecting unit 19 in this metal enclosed distribution panel 60 whereas the second grounding unit 16 is disposed between the interrupting unit 15 and the cable connecting unit 19 in the metal enclosed distribution panel 55 shown in Figs. 13 and 14. In other respects, the structure is the same.

### Embodiment 4

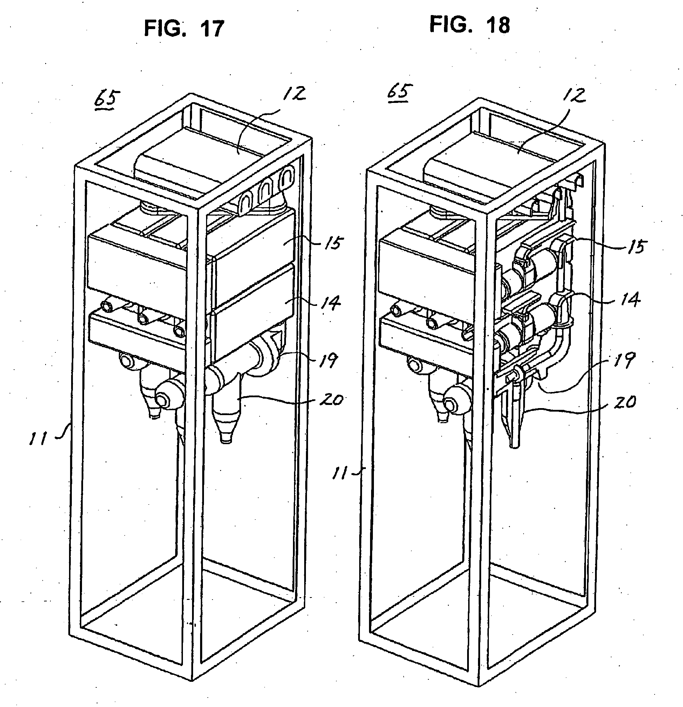

A metal enclosed distribution panel 65 shown in Figs. 17 and 18 has an overall structure similar to that of the metal enclosed distribution panel 60 shown in Figs. 15 and 16, but it is different in that the disconnecting unit 13 is removed and the grounding unit 14 and the interrupting unit 15 are exchanged in stacked position in the metal enclosed distribution panel 60 shown in Figs. 15 and 16. That is, in this metal enclosed distribution panel 65, the bus unit 12, the interrupting unit 15, the grounding unit 14 and the cable connecting unit 19 are positioned in the named order from the above. In other respects, the structure is the same.

### Embodiment 5

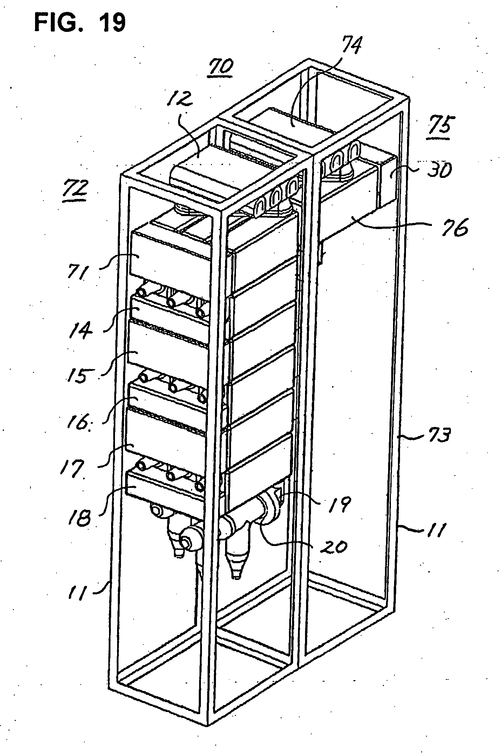

A metal enclosed distribution panel 70 shown in Fig. 19 is the dual bus conductor system and is similar to the metal enclosed distribution panel 10 shown in Figs. 1 and 2, but the metal enclosed distribution panel 70 comprises a metal enclosed distribution panel 72 that is similar to the metal enclosed distribution panel 10 shown in Figs. 1 and 2 but different in having a disconnecting unit 71 in which an unillustrated additional connecting terminal is disposed on the side surface of the mold resin insulator 27 of the first disconnecting unit 13. Disposed adjacent to the metal enclosed distribution panel 72 are a second bus unit 74 disposed within a second housing 73 having the same structure as that of the housing 11 and a shunt unit 75 supported by the housing 73 below the bus unit 74 and connected to the bus unit 74 and the adjacent disconnecting unit 71.

The shunt unit 75, which includes a switch (not shown) embedded within the mold resin insulator 76 having the same dimension and shape in a manner similar to other units of various kinds, comprises a truncated conical terminal (not shown) for fittingly engaging the second bus unit 74 to establish an electrical and mechanical connection therebetween and a truncated conical terminal (not shown) for fittingly engaging the connecting terminal disposed on the side surface of the adjacent disconnecting unit 71 to establish an electrical and mechanical connection therebetween. The shunt unit 75 further comprises the switching operating device 30 so that the switch in the mold resin insultor 76 may be operated to connect or disconnect the second bus unit 74 with respect to the disconnecting unit 13 by means of the shunt unit 75.

As understood from the metal enclosed distribution panels 10, 55, 60, 65 and 70 illustrated in Figs. 1, 2 and 13 to 19, each unit has a rectangular parallelopipe configuration of substantially equal dimensions and the positions and the shapes of the terminals for mutual connection are made identical to each other to provide an inter-changeability, so that suitable kind and combination of the units may be used according to various specifications and requirements, whereby the metal enclosed distribution panel of wide variety of performance can be easily provided.

### INDUSTRIAL APPLICABILITY

The vacuum valve of the present invention is useful as a metal enclosed distribution panel used in a power distribution substation.

## Claims

1. A metal-enclosure type distribution panel (10) comprising:
a housing (11);
an interrupting unit (15) for current interruption supported within said housing (11) and unitized by a mold resin insulator;
a bus unit (12) connected to said interrupting unit for connecting said interrupting unit to a bus; and
a cable connecting portion unit (19) for connecting a grounding unit to a cable;
**characterized in** comprising
a grounding unit (14, 16) supported within said housing (11) and unitized by a mold resin insulator and electrically and mechanically connected to said interrupting unit (15);
wherein said interrupting unit (15) and said grounding unit (14,16) include respective terminals (24) capable of engaging with each other to electrically and mechanically connect said grounding unit (14,16) and said interrupting unit (15), the cable connecting portion unit (19) being connected to said grounding unit (14,16).

2. A metal-enclosure type distribution panel (10) as claimed in claim 1, wherein said interrupting unit and said grounding unit each comprises:
a mold resin insulator including a partial concave portion (26) or a convex portion (32);
a stationary electrode and a movable electrode disposed within a vacuum vessel (33) embedded within said mold resin insulator;
a stationary side terminal conductor having one end connected to said stationary electrode and the other end (34, 35) defining a stationary side terminal together with said partial concave portion or said convex portion of said mold resin insulator;
a movable side conductor having one end connected to said movable electrode to define a shunt portion and the other end defining a movable side terminal together with said partial concave portion or said convex portion of said mold resin insulator;
an insulating rod (38) having an end connected within said vacuum vessel (33) to said movable electrode and the other end cable being connected to a switching operating device (29); and
a switching operating device (29) connected to said insulating rod (38) and having substantially the same projection as a projection shape in the direction of axis of said vacuum valve;
said stationary side terminal or said movable side terminal or said movable side terminal of said grounding unit and said stationary side terminal or said movable side terminal of said interrupting unit are fit-engaged to each other.

3. A metal-enclosure type distribution panel (10) as claimed in claim 1, wherein said interrupting unit, said disconnecting unit and/or said grounding unit are provided with three resin molded vacuum valves arranged side by side in parallel and connected to resin molded switching operating device, and wherein said switching operating device has a substantially rectangular parallelopipe configuration exhibiting a projected shape in the direction of an axis of said vacuum valve substantially the same as an outer contour of said three vacuum valves.

4. A metal enclosed distribution panel (10) as claimed in claim 1, further comprising a disconnector unit (13) unitized into a substantially rectangular parallelopipe by a mold resin insulator and electrically and mechanically connected to said grounding unit for opening an electric current path.

5. A metal enclosed distribution panel (10) as claimed in claim 4, further comprising a second grounding unit (16) unitized into a substantially rectangular parallelopipe by a mold resin insulator and electrically and mechanically connected to said interrupting unit.

6. A metal enclosed distribution panel (10) as claimed in claim 5, further comprising a second disconnector unit (17) unitized into a substantially rectangular parallelopipe by a mold resin insulator and electrically and mechanically connected to said grounding unit for opening an electric current path, and a third grounding unit supported within said housing, unitized into a substantially rectangular parallelopipe by a mold resin insulator and electrically and mechanically connected to said second disconnector unit,

7. A metal enclosed distribution panel (10) as claimed in claim 4, wherein said disconnector unit connected to said bus unit includes a shunt terminal, and further comprising a shunt unit (75) supported within said housing and connected to said shunt terminal of said disconnector unit, and a second bus unit connected to said shunt unit for connecting said interrupting unit to said bus.

8. A metal enclosed distribution panel (10) as claimed in claim 4, wherein said bus unit is the one in which the bus conductors for three phases are molded in three-phase-in-one by the mold resin insulator and in which one portion of said bus conductor is exposed so as to be electrically and mechanically connectable to the terminal of said disconnector unit.

9. A metal enclosed distribution panel (10) as claimed in claim 4, wherein said cable connection unit is the one in which the connecting conductors for three phases are molded in three-phase-in-one by the mold resin insulator and in which one end is connectable to said grounding unit and the other end is electrically and mechanically connectable to said cable connecting portion.

## Patentansprüche

1. Verteilereinrichtung eines Metallgehäusetyps (10), mit:
einem Gehäuse (11);
einer Unterbrechungseinheit (15) zur Stromunterbrechung, die innerhalb des Gehäuses (11) gehalten ist und durch einen Formharzisolator als Einheit ausgebildet ist;
einer Bus-Einheit (12), die zum Verbinden der Unterbrechungseinheit mit einem Bus, mit der Unterbrechungseinheit verbunden ist; und
einer Kabelverbindungsabschnittseinheit (19) zum Verbinden einer Erdungseinheit mit einem Kabel;
**gekennzeichnet durch** Aufweisen
einer Erdungseinheit (14, 16), die innerhalb des Gehäuses (11) gehalten ist und **durch** einen Formharzisolator als Einheit ausgebildet ist und elektrisch und mechanisch mit der Unterbrechungseinheit (15) verbunden ist;
wobei die Unterbrechungseinheit (15) und die Erdungseinheit (14, 16) entsprechende Anschlüsse (24) aufweisen, die in der Lage sind miteinander in Eingriff zu kommen, um die Erdungseinheit (14, 16) und die Unterbrechungseinheit (15) elektrisch und mechanisch zu verbinden und
die Kabelverbindungsabschnittseinheit (19) mit der Erdungseinheit (14, 16) verbunden ist.

2. Verteilereinrichtung eines Metallgehäusetyps (10), wie in Anspruch 1 beansprucht, wobei die Unterbrechungseinheit und die Erdungseinheit jeweils aufweisen:
einen Formharzisolator mit einem teilkonkaven Abschnitt (26) oder einem konvexen Abschnitt (32);
einer stationären Elektrode und einer beweglichen Elektrode, die innerhalb eines in dem Formharzisolator eingebetteten Vakuumbehälters (33) angeordnet sind;
einen stationären Seitenanschlussleiter, der ein Ende verbunden mit der stationären Elektrode aufweist und wobei das andere Ende (34, 35) zusammen mit dem teilkonkaven Abschnitt oder dem konvexen Abschnitt des Formharzisolators einen stationären Seitenanschluss definiert;
einen beweglichen Seitenleiter, der ein Ende verbunden mit der beweglichen Elektrode aufweist, um einen Shunt-Abschnitt zu definieren und wobei das andere Ende zusammen mit dem teilkonkaven Abschnitt oder dem konvexen Abschnitt des Formharzisolators einen beweglichen Seitenanschluss definiert;
eine isolierende Stange (38), die ein Ende aufweist, das innerhalb des Vakuumbehälters (33) mit der beweglichen Elektrode verbunden ist und wobei das Kabel des anderen Endes mit einer Schaltbetätigungseinrichtung (29) verbunden ist; und
einer Schaltbetätigungseinrichtung (29), die mit der isolierenden Stange (38) verbunden ist und im Wesentlichen die gleiche Projektion aufweist wie eine Projektionsform in der Achsrichtung des Vakuumventils;
wobei der stationäre Seitenanschluss oder der bewegliche Seitenanschluss oder der bewegliche Seitenanschluss der Erdungseinheit und der stationäre Seitenanschluss oder der bewegliche Seitenanschluss der Unterbrechungseinheit miteinander in Passeingriff stehen.

3. Verteilereinrichtung eines Metallgehäusetyps (10), wie in Anspruch 1 beansprucht, wobei
die Unterbrechungseinheit, die Trenneinheit und/oder die Erdungseinheit mit drei harzgeformten Vakuumventilen versehen sind, die Seite an Seite parallel und verbunden mit einer harzgeformten Schaltbetätigungseinrichtung angeordnet sind, und wobei
die Schaltbetätigungseinrichtung einen im Wesentlichen rechteckigen parallelopiden Aufbau aufweist, der eine Projektionsform in der Richtung einer Achse des Vakuumventils aufweist, die im Wesentlichen die gleiche ist wie eine Außenkontur der drei Vakuumventile.

4. Verteilereinrichtung eines Metallgehäusetyps (10), wie in Anspruch 1 beansprucht, ferner mit
einer Trenneinheit (13), die durch einen Formharzisolator als Einheit als ein im Wesentlichen rechteckiges Parallelopipe ausgebildet ist und zum Öffnen eines Wegs eines elektrischen Stroms, elektrisch und mechanisch mit der Erdungseinheit verbunden ist.

5. Verteilereinrichtung eines Metallgehäusetyps (10), wie in Anspruch 4 beansprucht, ferner mit
einer zweiten Erdungseinheit (16), die durch einen Formharzisolator als Einheit als ein im Wesentlichen rechteckiges Parallelopipe ausgebildet ist und elektrisch und mechanisch mit der Unterbrechungseinheit verbunden ist.

6. Verteilereinrichtung eines Metallgehäusetyps (10), wie in Anspruch 5 beansprucht, ferner mit
einer zweiten Trenneinheit (17), die durch einen Formharzisolator als Einheit als ein im Wesentlichen rechteckiges Parallelopipe ausgebildet ist und zum Öffnen eines Wegs eines elektrischen Stroms elektrisch und mechanisch mit der Erdungseinheit verbunden ist, und
einer dritten Erdungseinheit, die innerhalb des Gehäuses gehalten ist, durch einen Formharzisolator als Einheit als ein im Wesentlichen rechteckiges Parallelopipe ausgebildet ist und elektrisch und mechanisch mit der zweiten Trenneinheit verbunden ist.

7. Verteilereinrichtung eines Metallgehäusetyps (10), wie in Anspruch 4 beansprucht, wobei
die mit der Bus-Einheit verbundene Trenneinheit einen Shunt-Anschluss und ferner eine Shunt-Einheit (75), die in dem Gehäuse gehalten ist und mit dem Shunt-Anschluss der Trenneinheit verbunden ist und eine zweite Bus-Einheit aufweist, die mit der Shunt-Einheit zum Verbinden der Unterbrechungseinheit mit dem Bus verbunden ist.

8. Verteilereinrichtung eines Metallgehäusetyps (10), wie in Anspruch 4 beansprucht, wobei
die Bus-Einheit eine Einheit ist, in der die Bus-Leiter für drei Phasen durch den Formharzisolator in drei-Phasen-in-einer geformt sind und in denen ein Abschnitt des Bus-Leiters derart frei liegt, dass er elektrisch und mechanisch mit dem Anschluss der Trenneinheit verbindbar ist.

9. Verteilereinrichtung eines Metallgehäusetyps (10), wie in Anspruch 4 beansprucht, wobei
die Kabelverbindungseinheit eine Einheit ist, in der die Verbindungsleiter für drei Phasen durch den Formharzisolator in drei-Phasen-in-einer geformt sind und in der ein Ende mit der Erdungseinheit verbindbar ist und das andere Ende elektrisch und mechanisch mit dem Kabelverbindungsabschnitt verbindbar ist.

## Revendications

1. Tableau de distribution (10) de type à coffret métallique, comprenant :
un boîtier (11) ;
une unité d'interruption (15) pour l'interruption du courant, supportée à l'intérieur dudit boîtier (11) et unifiée par un isolateur de résine de moulage ;
une unité de barre omnibus (12) raccordée à ladite unité d'interruption pour raccorder ladite unité d'interruption à une barre omnibus ; et
une unité de partie de raccordement de câble (19) pour raccorder une unité de mise à la terre à un câble;
**caractérisé en ce qu'**il comprend :
une unité de mise à la terre (14, 16) supportée à l'intérieur dudit boîtier (11) et unifiée par un isolateur de résine de moulage et raccordée électriquement et mécaniquement à ladite unité d'interruption (15) ;
dans lequel ladite unité d'interruption (15) et ladite unité de mise à la terre (14, 16) comprennent des bornes (24) respectives pouvant se mettre en prise entre elles pour raccorder électriquement et mécaniquement ladite unité de mise à la terre (14, 16) et ladite unité d'interruption (15),
l'unité de partie de raccordement de câble (19) étant raccordée à ladite unité de mise à la terre (14, 16).

2. Tableau de distribution (10) de type à coffret métallique selon la revendication 1,
dans lequel ladite unité d'interruption et ladite unité de mise à la terre comprennent chacune :
un isolateur de résine de moulage comprenant une partie concave partielle (26) ou une partie convexe (32) ;
une électrode fixe et une électrode mobile disposée à l'intérieur d'un réservoir à vide (33) encastré à l'intérieur dudit isolateur de résine de moulage ;
un conducteur de borne du côté fixe ayant une extrémité raccordée à ladite électrode fixe et l'autre extrémité (34, 35) définissant une borne du côté fixe conjointement avec ladite partie concave partielle ou ladite partie convexe dudit isolateur de résine de moulage ;
un conducteur du côté mobile ayant une extrémité raccordée à ladite électrode mobile afin de définir une partie de shunt et l'autre extrémité définissant une borne du côté mobile conjointement avec ladite partie concave partielle ou ladite partie convexe dudit isolateur de résine de moulage ;
une tige isolante (38) ayant une extrémité raccordée à l'intérieur dudit réservoir à vide (33) à ladite électrode mobile et l'autre câble d'extrémité étant raccordé à un dispositif d'actionnement de commutation (29) ; et
un dispositif de commande de commutation (29) raccordé à ladite tige isolante (38) et ayant sensiblement la même saillie qu'une forme de saillie dans la direction de l'axe de ladite soupape de dépression ;
ladite borne du côté fixe ou ladite borne du côté mobile ou ladite borne du côté mobile de ladite unité de mise à la terre et ladite borne du côté fixe ou ladite borne du côté mobile de ladite unité d'interruption sont mises en prise par ajustement entre elles.

3. Tableau de distribution (10) de type à coffret métallique selon la revendication 1, dans lequel ladite unité d'interruption, ladite unité de déconnexion et/ou ladite unité de mise à la terre sont prévues avec trois soupapes de dépression moulées en résine côte à côte en parallèle et raccordées au dispositif de commande de commutation moulé en résine, et dans lequel ledit dispositif de commande de commutation a une configuration de parallélépipède sensiblement rectangulaire présentant une forme en saillie dans la direction d'un axe de ladite soupape de dépression sensiblement identique à un contour externe desdites trois soupapes de dépression.

4. Tableau de distribution (10) à coffret métallique selon la revendication 1, comprenant en outre une unité de sectionneur (13) unifié dans un parallélépipède sensiblement rectangulaire par un isolateur de résine de moulage et électriquement et mécaniquement raccordée à ladite unité de mise à la terre pour ouvrir une trajectoire de courant électrique.

5. Tableau de distribution (10) à coffret métallique selon la revendication 4, comprenant en outre une deuxième unité de mise à la terre (16) unifiée dans un parallélépipède sensiblement rectangulaire par un isolateur de résine de moulage et électriquement et mécaniquement raccordée à ladite unité d'interruption.

6. Tableau de distribution (10) à coffret métallique selon la revendication 5, comprenant en outre une seconde unité de sectionneur (17) unifiée dans un parallélépipède sensiblement rectangulaire par un isolateur de résine de moulage et électriquement et mécanique raccordée à ladite unité de mise à la terre pour ouvrir et fermer une trajectoire de courant électrique, et une troisième unité de mise à la terre à l'intérieur dudit boîtier, unifiée dans un parallélépipède par un isolateur de résine de moulage et électriquement et mécaniquement raccordée à ladite seconde unité de sectionneur.

7. Tableau de distribution (10) à coffret métallique selon la revendication 4, dans lequel ladite unité de sectionneur raccordée à ladite unité de barre omnibus comprend une borne de shunt et comprenant en outre une unité de shunt (75) supportée à l'intérieur dudit boîtier et raccordée à ladite borne de shunt de ladite unité de sectionneur et une seconde unité de barre omnibus raccordée à ladite unité de shunt pour raccorder ladite unité d'interruption à ladite barre omnibus.

8. Tableau de distribution (10) à coffret métallique selon la revendication 4, dans lequel ladite unité de barre omnibus est celle sur laquelle les conducteurs de barre omnibus pour trois phases sont moulés trois phases en un bloc par l'isolateur de résine de moulage et dans laquelle une partie dudit conducteur de barre omnibus est exposée afin de pouvoir être raccordée électriquement et mécaniquement à la borne de ladite unité de sectionneur.

9. Tableau de distribution (10) à coffret métallique selon la revendication 4, dans lequel ladite unité de raccordement de câble est celle dans laquelle les conducteurs de raccordement pour trois phases sont moulés trois phases en un bloc par l'isolateur de résine de moulage et dans laquelle une extrémité peut être raccordée à ladite unité de mise à la terre et l'autre extrémité peut électriquement et mécaniquement être raccordée à ladite partie de raccordement de câble.
